# EUROPEAN PATENT APPLICATION

(11) **EP 1 675 400 A1**
(43) Date of publication of application: **28.06.2006**
(21) Application number: 04030760.5
(22) Date of filing: 24.12.2004
(51) Int. Cl.: H04N 7/24, H04N 5/00, H04N 9/82

(54) **Video processing device and method for recording selected digital broadcast events**

(71) Applicant: MATSUSHITA ELECTRIC INDUSTRIAL CO., LTD., Kadoma-shi, Osaka-fu 571 (JP)
(72) Inventor: Lajmi, Lilia, 38116 Braunschweig (DE); Heiber, Henning, 31224 Peine (DE)
(74) Representative: Gerstein, Hans Joachim

(57) **Abstract**

A video processing device (1) is disclosed for controlling the recording of selected digital broadcast events according to the digital video broadcasting standard (DVB) comprising a recording controller (2) for automatically starting or stopping the record of the selected broadcast event.

The recording controller (2) is provided for continuously checking the running status entry for a selected broadcast event intended to be recorded in the Event Information Table (EIT), wherein the Event Information Table (EIT) is broadcasted as part of a Program Service Information (PSI) transmitted in a transport stream data (TS), and for setting the status of a video recording device (3) to start or stop of recording depending on the running status entry.

## Description

The invention relates to a video processing device for controlling the recording of selected digital broadcast events according to the Digital Video Broadcasting Standard (DVB) comprising a recording controller for automatically starting or stopping the record of a selected broadcast event.

The invention further relates to a method for recording selected digital broadcast events according to the Digital Video Broadcasting Standard (DVB) by means of a video processing device.

Digital video recorders are well known in the prior art, which allows to enter a selected broadcast event into a record list in order to automatically start or stop the record of the selected broadcast event, i. e. a video program.

The problem with the present video recorders is, that the recording of digital video streams according to the Digital Video Broadcast Standard is only time controlled. There is still no method that permits the accurate recording of delayed or forwarded broadcast events.

It is therefore an object of the present invention to provide an improved video processing device and method for controlling the recording of selected digital broadcast events, which permits an improved automatic control of starting or stopping the record of a selected broadcast event, even if the broadcast event is delayed or forwarded related to a planed broadcast time.

The object of the invention is achieved by a video processing device according to the preamble of claim 1 in, that the recording controller is provided for continuously checking the running status entry for a selected broadcast event intended to be recorded in the Event Information Table, wherein the Event Information Table is broadcasted as part of program service information transmitted in a transport stream data, and for setting the status of a video recording device to start or stop of recording depending on the running status entry.

By way of monitoring the running status for controlling the start and/or stop time of a broadcast event, an accurate timer recording mechanism for Digital Video Broadcast signals is provided. The running status indicates if a broadcast event is running, not running, starting in few seconds or pausing.

The recording controller is provided for continuously comparing an event identifier of a present Event Information Table in a transport stream data received by the video processing device with a stored event identifier for the selected broadcast event intended to be recorded and setting the status of the video recorder based upon the running status in case of an event identifier match in an improved embodiment.

Thus, an unknown event identifier for the selected broadcast event can be easily achieved by service information, which is included in a transport stream of a DVB-signal.

The video recording device may be a device for recording videos on tapes, Digital Versatile Disks, hard disks etc.

Additionally or alternatively, the recording controller can be provided for comparing the program identification label of the program delivery control descriptor, which is transmitted in the DVB-signal, with the start time of the selected broadcast event intended to be recorded in order to extract and store the event identifier for the selected broadcast event.

The program delivery control descriptor PDC contains date and time of the planed starting point of a broadcast event.

In an improved embodiment, the recording controller is provided for comparing start time entries in the Event Information Table with the start time of the selected broadcast event in order to extract and store the event identifier for the selected broadcast event.

The recording controller can be further provided for setting the video recorder status to start or stop of recording upon start or stop times entered into a record list for selected broadcast events in case that no Event Information Table comprising data for a respective selected broadcast event or no event identifier for the respective selected broadcast event has been found. Thus, besides the record control based upon the running status entry, a simply time control according to the prior art can be taken place if necessary.

The object of the invention is further achieved by the method for recording selected digital broadcast events according to the DVB-standard by means of a video processing means comprising the steps of:
- continuously checking the running status entry in the Event Information Table for a selected broadcast event intended to be recorded, wherein the Event Information Table is broadcasted as part of Program Service Information transmitted in a transport stream data, and
- setting the status of a video recording device depending on the running status entry for automatically starting or stopping the record of a selected broadcast event.

Preferred embodiments of the video processing device and the method are disclosed in the sub-claims.

The invention is further explained in detail by way of example together with the enclosed drawings, wherein
- Figure 1 -: is a block diagram of the digital recording control method;
- Figure 2 -: is a block diagram of a video processing device for recording digital videos, wherein a video recording device is integrated into the video processing device; and
- Figure 3 -: is a block diagram of a video processing device for recording digital videos with an external video recording device.

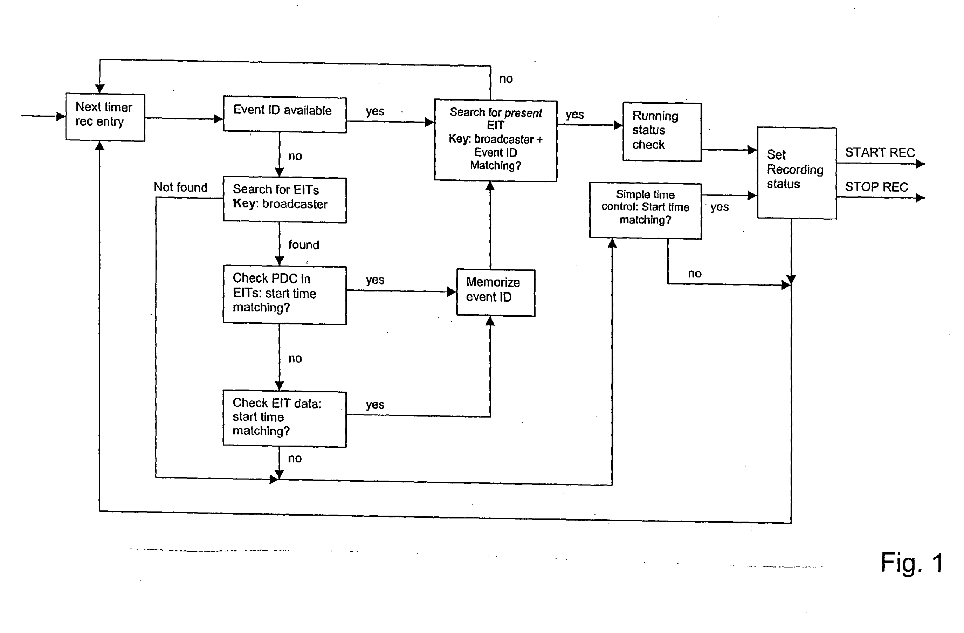

Figure 1 shows a block diagram of the method for recording digital videos, which are transmitted and received according to the Digital Video Broadcasting Standard DVB.

The user enters a selected broadcast event into a record list of a video recorder, as it is well known in the prior art. The list of record entries for the selected broadcast events comprises at least planed start and/or stop times of the selected broadcast events.

In the process of receiving a transport stream according to the DVB-standard, the Event Information Table EIT is continuously filtered out of the transport data stream. Then, it is checked whether an event identifier event_ID for each timer record entry if available. In case, that an event identifier event_ID is available for the timer record entry, the present Event Information Table EIT is searched for a broadcaster and event identifier match. Then, in case that the broadcaster and event identifier in the present Event Information Table matches to the data for the selected broadcast event, the running status entry of the Event Information Table is read and used as control data for starting and/or stopping the record of the selected broadcast event.

The Event information table EIT is defined in the ETSI EN 300 468-Standard and provides information in chronological order regarding the events contained within each service. Four classifications of the Event Information Table EIT have been identified distinguishable by the use of different table identifiers (table_ID):
- 1): actual transport stream TS, present/following event information = table_id = "0x4E";
- 2): other transport stream TS, present/following event information = table_id = "0x4F";
- 3): actual transport stream TS, event schedule information = table_id = "0x50" to "0x5F";
- 4): other transport stream TS, event schedule information = table_id = "0x60" to "0x6F".

The present/following table shall contain only information pertaining to the present event and the chronologically following event carried by a given service on either the actual transport stream TS or another transport stream TS, except in the case of a Near Video on Demand NVOD reference service where it may have more than two event descriptions. The event schedule tables for either the actual transport stream TS or other transport streams contain a list of events in the form of a schedule, namely including events taking place at sometime beyond the next event. The Event Information Table EIT schedule tables are optional. The event information shall be chronologically ordered.

The Event Information Table EIT is segmented into event information sections as follows:

| **Syntax** | **Number of bits** |
|---|---|
| event_information_section (){ | |
| table_id | 8 |
| section_syntax_indicator | 1 |
| reserved_future_use | 1 |
| reserved | 2 |
| section_length | 12 |
| service_id | 16 |
| reserved | 2 |
| version_number | 5 |
| current_next_indicator | 1 |
| section_number | 8 |
| last_section_number | 8 |
| transport_stream_id | 16 |
| original_network_id | 16 |
| segment_last_section_number | 8 |
| last_table_id for (i=0; i<N; i++) { | 8 |
| event_id | 16 |
| start_time | 40 |
| duration | 24 |
| running_status | 3 |
| free_CA_mode | 1 |
| descriptors_loop_length for (i=0; i<N; i++) { descriptor () | 12 |
| } | |
| } | |
| CRC_32 | 32 |
| } | |

The event_id is a 16-bit field, which contains the identification number of the described event and is uniquely allocated within a service definition. The start_time is a 40-bit field containing the start time of the event in universal time, co-ordinated (OTC) and modified Julian date (MJD). If the start time is undefined, e. g. for an event in a near video on demand NVOD referenced service, all bits of the field are set to "1".

The running status entry of the Event Information Table is a 3-bit field indicating the status of the event. The running status entry is defined in the ETSI EN 300 468 V1.6.1-Standard "Digital Video Broadcasting" (DVB); Specification for Service Information (SI) in DVB systems as follows:

| **Value** | **Meaning** |
|---|---|
| 0 | Undefined |
| 1 | not running |
| 2 | starts in a few seconds |
| 3 | Pausing |
| 4 | Running |
| 5 to 7 | reserved for future use |

Depending on the running status entry, the recording status is set e. g. to start record or stop record.

In case, that there is no match of the broadcaster and the event identifier with the timer record entry in the present Event Information Table EIT, the next timer record entry is read and checked as explained above.

In case, that no event identifier event_ID is available, all the Event Information Tables EIT received in the transport stream data TS are searched for data entries of the broadcaster for the selected broadcast event entered in the record entry. In case, that data entries for the broadcaster are found in the Event Information Table EIT, the so-called Program Delivery Control PDC, which is contained in the Event Information Table EIT is checked for match of the start time in the PDC-descriptor of the Program Delivery Control PDC and the start time for the selected broadcast event in the timer record entry. The PDC-descriptor is defined in the ETSI EN 300 231 and ETSI EN 300 468-Standard. The PDC-descriptor carries the program identification label PIL, which contains date and time of the first published start time of a certain broadcast event.

The program identification label PIL of the PDC-descriptor is a 20-bit field having the following structure:

| **Program Identification Label** | | | | | | | | | | | | | | | | | | | |
|---|---|---|---|---|---|---|---|---|---|---|---|---|---|---|---|---|---|---|---|
| 1 | 2 | 3 | 4 | 5 | 6 | 7 | 8 | 9 | 10 | 11 | 12 | 13 | 14 | 15 | 16 | 17 | 18 | 19 | 20 |
| M | | | | L | M | | | L | M | | | | L | M | | | | | L |
| Day | | | | | Month | | | | hour | | | | | Minute | | | | | |

In case, that the start time in the Program Identification Label PIL of the PDC-descriptor matches the start time in the timer record entry for the selected broadcast event, the event identifier event_ID in the Event Information Table EIT, which Event Information Table EIT comprises the PDC-descriptor is then read an memorized for further use in the search of the event identifier event_ID in the present Event Information Table EIT.

In case, that no start time match could be found in the Program Delivery Control PDC data of the Event Information Tables EIT, the Event Information Table EIT data itself are checked for a match of the start time with the start time of the selected broadcast event in the timer record entry.

In case, that the start_time in the Event Information Table EIT matches the start time of the timer record entry for the selected broadcast event, the event identifier event_id is memorized for the following search in the present Event Information Table EIT. Otherwise, a simple time control is taken place according to the current technique, wherein the recording status is set when the start time in the timer record entry matches the actual clock time of the video recorder 1. However, this will cause record errors in case, that the selected broadcast event is delayed or forwarded.

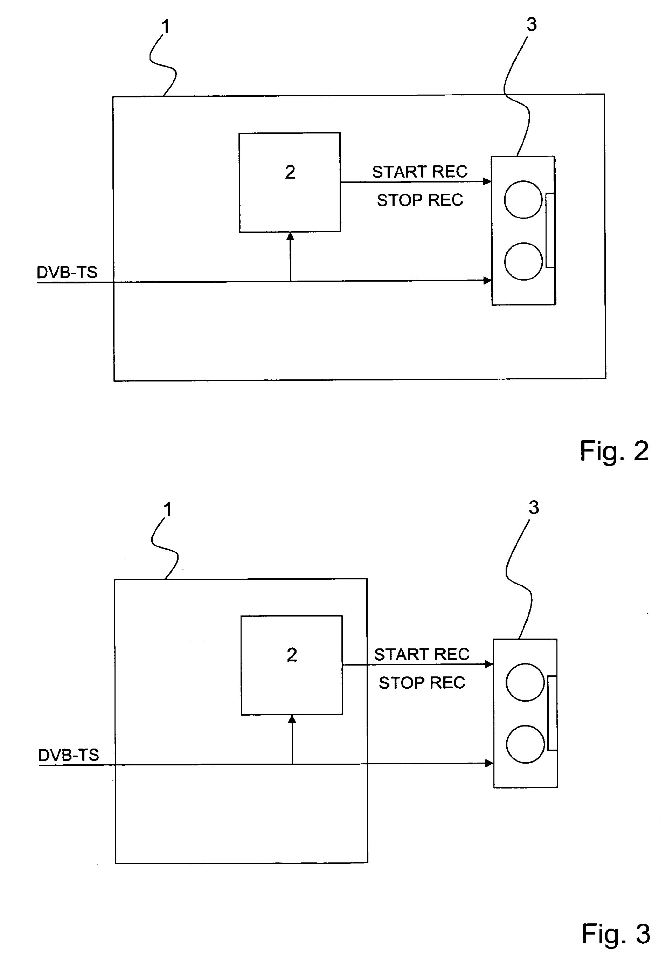

Figure 2 shows a block diagram of a video processing device 1 according to the present invention for recording digital videos according to the digital video broadcasting standard DVB. The video processing device 1 comprises a recording controller 2 for automatically starting or stopping the record of a selected broadcast event by way of the method explained above within reference to figure 1. A video recording device 3 is provided for recording the video on tape, Digital Versatile Disc DVD etc., wherein the video recording device 3 is controlled by the recording controller 2. The video processing device 1 can be provided as a video recorder or provided separately e. g. as set-top-box for control an external video recording device 3.

Especially, the recording controller 2 is provided for checking the running status entry for a selected broadcast event, which is intended to be recorded, in the present Event Information Table EIT and for setting the status of the video recording device 3 to start or stop of recording of the present broadcast event depending on the running status entry.

The recording controller 2 is using the information in the program delivery control descriptor PDC, the present and following event information and the running status for the controlling. As explained above, the PDC-descriptor contains date and time of the planed starting point. The present and following event information indicates the start and the stop time of the actual and of the next broadcaster, the broadcast name and the event identifier event_ID, which is the unique identifier for each broadcast. The running status indicates if a broadcast is running, not running, starting in a few seconds or pausing.

The control mechanism provided by the recording controller 2 is as follows:
- 1): Filtering the Event Information Table data EIT for the corresponding timer record entry for a selected broadcast event to be recorded, wherein the Event Information Table data EIT are selected from the DVB data stream;
- 2): Trying to get the event identifier event_id for the timer record entry by comparing the program delivery control PDC descriptor data with the start time of the record entry;
- 3): If the program delivery control PDC descriptor is not available, the event identifier event_ID is tried to get by comparing start times from the Event Information Table EIT with the start time of the record entry for the selected broadcast event intended to be recorded;
- 4): At the time when the event identifier event_id is found, the stored event identifier event_id is compared with the event identifier event_id of the present Event Information Table EIT. On condition, that these both event identifiers are identical, the recording may be started depending on the running status, if the running status is available in the Event Information Table data;
- 5): If no Event Information Table data EIT or no event identifier event_id is found, the video processing device 1 should be time controlled with start and stop time from the record list.

Figure 3 shows the video processing device 1 according to Figure 2 with the difference, that the video recording device 3 is situated external to the video processing device 1. Thus, the video processing device 1 is provided for controlling the external video recording device 3, e. g. a DVD recorder etc..

## Claims

1. Video processing device (1) for controlling the recording of selected digital broadcast events according to the Digital Video Broadcasting Standard (DVB) comprising a recording control means (2) for automatically starting or stopping the record of a selected broadcast event,
**characterized in**
**that** the recording controller means (2) in provided for continuously checking the running status entry in the event information table (EIT) for a selected broadcast event intended to be recorded, wherein the event information table (EIT) is broadcasted as part of a program service information (PSI) transmitted in a transport stream data (TS), and for setting the status of a video recording device (3) to start or stop of recording depending on the running status entry.

2. Video processing device (1) according to claim 1, **characterized in that** the recording controller (2) is provided for continuously comparing an event identifier (event-ID) of a present event information table (EIT) in a transport stream data (TS) received by the video processing device (1) with an stored event identifier (event_id) for the selected broadcast event intended to be recorded, and setting the video recorder status based upon the running status in case of an event identifier (event_id) match.

3. Video processing device (1) according to claim 2, **characterized in that** the recording controller (2) is provided for comparing the program identification label of the Program Delivery Control (PDC) Descriptor, which Program Delivery Control (PDC) Descriptor is transmitted in the Digital Video Broadcast (DVB) signal, with the start time of the selected broadcast event intended to be recorded in order to extract the to be stored event identifier (event_ID) for the selected broadcast event.

4. Video processing device (1) according to one of the preceding claims, **characterized in that** the recording controller (2) is provided for comparing start time entries in the event information table (EIT) with the start time of the selected broadcast event in order to extract the to be stared event identifier (event_ID) for the selected broadcast event.

5. Video processing device (1) according to one of the preceding claims, **characterized in that** the recording controller (2) is provided for setting the status of a video recording device (3) to start or stop of recording upon start or stop times entered into a record list for selected broadcast events in case that no event information table (EIT) comprising data for respective selected broadcast event or no event identifier (event_ID) for the respective selected broadcast event is found.

6. Video processing device (1) according to one of the preceding claims, wherein the video processing device (1) is a video recorder or set-top-box.

7. Method for controlling the recording of selected digital broadcast events according to the Digital Video Broadcasting Standard (DVB) by means of a video processing device (1), **characterized by**
- continuously checking the running status entry in the event information table (EIT) for a selected broadcast event intended to be recorded, wherein the event information table (EIT) is broadcasted as part of program service information (PSI) transmitted in a transport stream data (TS); and
- setting the status of the video recording device (3) depending on the running status entry for automatically starting or stopping the record of a selected broadcast event.

8. Method according to claim 7, **characterized by** continuously comparing an event identifier (event_ID) of a present event information table (EIT) in a transport stream data (TS) received by the video processing device (1) with the stored event identifier (event_ID) for the selected broadcast event intended to be recorded, and setting the status of a video recording device (3) based upon the running status in case of an event identifier (event_ID) match.

9. Method according to claim 7 or 8, **characterized by** comparing the program identification label of the Program Delivery Control (PDC) descriptor, which Program Delivery Control (PDC) descriptor is transmitted in the Digital Video Broadcast (DVB) signal, with the start time of the selected broadcast event intended to be recorded in order to extract and store the event identifier (event_ID) for the selected broadcast event.

10. Method according to one of claims 6 to 8, **characterized by** comparing start time entries in the event information table (EIT) with the start time of the selected broadcast event in order to extract and store the event identifier (event_ID) for the selected broadcast event.

11. Method according to one of claims 6 to 9, **characterized by** setting the status of the video recording device (3) to start or stop of recording upon start or stop times entered in to a record list for selected broadcast events in case that no event information table (EIT) comprising data for a respective selected broadcast event or no event identifier (event_ID) for the respective selected broadcast event is found.

## Amended claims

### Amended claims in accordance with Rule 86(2) EPC.

**1.** Video processing device (1) for controlling the recording of selected digital broadcast events according to the Digital Video Broadcasting Standard (DVB) comprising a recording control means (2) for automatically starting or stopping the record of a selected broadcast event, wherein the recording controller means (2) is provided for continuously checking the running status entry in the event information table (EIT) indicating the status of a related event as not running event, event starting in a few seconds, pausing event or already running event for a selected broadcast event intended to be recorded, wherein the event information table (EIT) is broadcasted as part of a program service information (PSI) transmitted in a transport stream data (TS), and for setting the status of a video recording device (3) to start or stop of recording depending on the running status entry, **characterized in that** the recording controller (2) is provided for continuously comparing an event identifier (event-ID) of a present event information table (EIT) in a transport stream data (TS) received by the video processing device (1) with an stored event identifier (event_id) for the selected broadcast event intended to be recorded, and setting the video recorder status based upon the running status in case of an event identifier (event_id) match.

**2.** Video processing device (1) according to claim 1, **characterized in that** the recording controller (2) is provided for comparing the start time in the Program Identification Label (PIL) of the Program Delivery Control (PDC) Descriptor, which Program Delivery Control (PDC) Descriptor is transmitted in the Digital Video Broadcast (DVB) signal, with the start time of the selected broadcast event intended to be recorded in order to extract the to be stored event identifier (event_ID) for the selected broadcast event from the Event Information Table (EIT) comprising the Program Delivery Control (PDC) Descriptor in case of a start time match.

**3.** Video processing device (1) according to one of the preceding claims, **characterized in that** the recording controller (2) is provided for comparing start time entries in the event information table (EIT) with the start time of the selected broadcast event in order to extract the to be stared event identifier (event_ID) for the selected broadcast event.

**4.** Video processing device (1) according to one of the preceding claims, **characterized in that** the recording controller (2) is provided for setting the status of a video recording device (3) to start or stop of recording when start or stop times entered into a record list for selected broadcast events matches the actual clock time of the video recorder (1) in case that no event information table (EIT) comprising data for respective selected broadcast event or no event identifier (event_ID) for the respective selected broadcast event is found.

**5.** Video processing device (1) according to one of the preceding claims, wherein the video processing device (1) is a video recorder or set-top-box.

**6.** Method for controlling the recording of selected digital broadcast events according to the Digital Video Broadcasting Standard (DVB) by means of a video processing device (1), comprising the steps of:
- continuously checking the running status entry indicating the status of a related event as not running event, starting in a few seconds, pausing event or already running event in the event information table (EIT) for a selected broadcast event intended to be recorded, wherein the event information table (EIT) is broadcasted as part of program service information (PSI) transmitted in a transport stream data (TS); and
- setting the status of the video recording device (3) depending on the running status entry for automatically starting or stopping the record of a selected broadcast event,
**characterized by** continuously comparing an event identifier (event_ID) of a present event information table (EIT) in a transport stream data (TS) received by the video processing device (1) with the stored event identifier (event_ID) for the selected broadcast event intended to be recorded, and setting the status of a video recording device (3) based upon the running status in case of an event identifier (event_ID) match.

**7.** Method according to claim 6, **characterized by** comparing the start time in the Program Identification Label (PIL) of the Program Delivery Control (PDC) descriptor, which Program Delivery Control (PDC) descriptor is transmitted in the Digital Video Broadcast (DVB) signal, with the start time of the selected broadcast event intended to be recorded in order to extract and store the event identifier (event_ID) for the selected broadcast event from the Event Information Table (EIT) comprising the Program Delivery Control (PDC) Descriptor in case of a start time match.

**8.** Method according to one of claims 6 to 7, **characterized by** comparing start time entries in the event information table (EIT) with the start time of the selected broad-cast event in order to extract and store the event identifier (event_I.D) for the selected broadcast event.

**9.** Method according to one of claims 6 to 8, **characterized by** setting the status of the video recording device (3) to start or stop of recording upon start or stop times entered in to a record list for selected broadcast events in case that no event information table (EIT) comprising data for a respective selected broadcast event or no event identifier (event_ID) for the respective selected broadcast event is found.
